# EUROPEAN PATENT APPLICATION

(11) **EP 2 824 971 A1**
(43) Date of publication of application: **14.01.2015**
(21) Application number: 13175803.9
(22) Date of filing: 09.07.2013
(51) Int. Cl.: H04W 48/20, H04W 84/04, H04W 72/12, H04W 74/08

(54) **Scheduling requests in small cell networks**

(71) Applicant: FUJITSU LIMITED, Kawasaki-shi, Kanagawa 211-8588 (JP)
(72) Inventor: Fang, Yiwei, Hayes, Middlesex UB4 8FE (GB); Moulsley, Timothy, Caterham, Surrey CXR3 5EE (GB); Li, Zhaojun, Guildford, Surrey GU3 2DJ (GB)
(74) Representative: Stebbing, Timothy Charles

(57) **Abstract**

A Small Cell Network in which a terminal is simultaneously served by a macro cell and one or more small cells. These may operate at different frequencies, and may have different bandwidths, traffic loading and support different QoS (Quality of Service). The terminal indicates its preference of cell to employ for its uplink data transmission by sending a scheduling request using a cell selected from a set of cells by the mobile terminal, depending on the UL channel characteristics for the cells in the set and/or on other criteria.

## Description

### Field of the Invention

The present invention relates to cellular wireless networks, particularly to so-called Small Cell networks and more particularly to the transmission by terminals of scheduling requests in such networks.

### Background of the Invention

Cellular wireless networks are widely known in which base stations (BSs) communicate with terminals (also called user equipments (UEs), or subscriber or mobile stations) within range of the BSs. The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the user equipments which it serves.

### Basic LTE Network

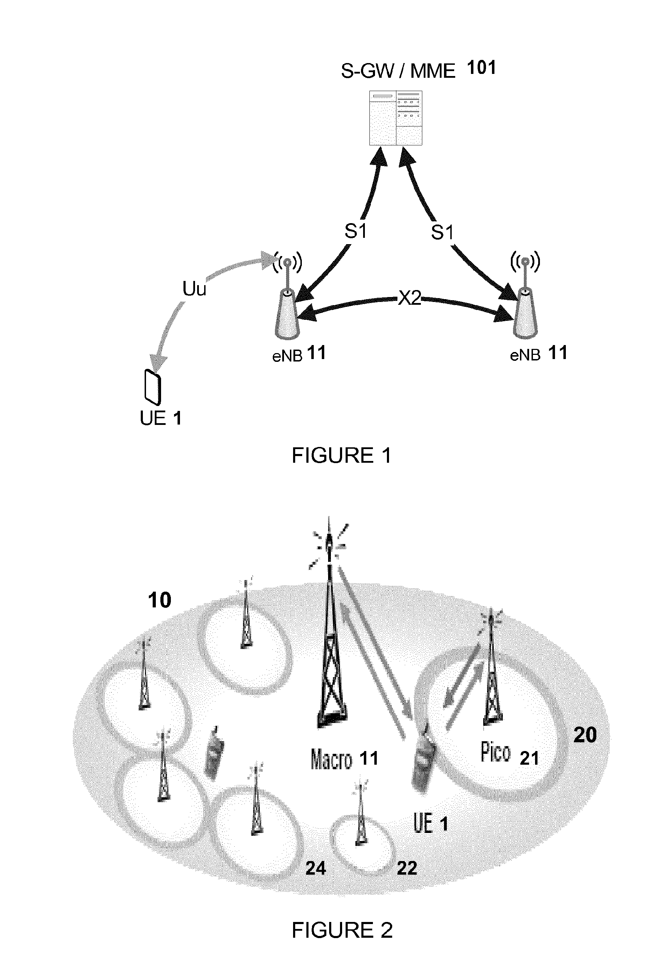

One type of cellular wireless network is based upon the set of standards referred to as Long-Term Evolution (LTE). The current version of the standard, Release 11, is also referred to as LTE-A (LTE-Advanced). The network topology in LTE is illustrated in Figure 1. As can be seen, each terminal 1, called a UE in LTE, connects over a wireless link via a Uu interface to a base station in the form of an enhanced node-B or eNodeB 11. It should be noted that various types of eNodeB are possible. An eNodeB may support one or more cells at different carrier frequencies having differing transmit powers and different antenna configurations, and therefore providing coverage areas (cells) of differing sizes. Multiple eNodeBs deployed in a given geographical area constitute a wireless network called the E-UTRAN (and henceforth generally referred to simply as "the network"). An LTE network can operate either in a Time Division Duplex, TDD, mode in which the uplink and downlink are separated in time but use the same carrier frequency, or Frequency Division Duplex, FDD, in which the uplink and downlink occur simultaneously at different carrier frequencies.

Each eNodeB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNodeBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks.

### Small Cell Network (SCN)

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will adopt a "heterogeneous network" structure composed of two or more different kinds of cell, also (and henceforth) referred to as a Small Cell Network or SCN.

Figure 2 depicts a simple SCN. The large ellipse 10 represents the coverage area or footprint of a Macro cell provided by a base station (Macro BS) 11. The smaller ellipses 20, 22 and 24 represent Small cells within the coverage area of Macro cell 10, each having a respective base station (exemplified by Pico BS 21). Here, the Macro cell is a cell providing basic "underlay" coverage in the network of a certain area, and the Small cells are overlaid over the Macro cell, using the same or different carrier frequencies for capacity boosting purposes particularly within so-called "hot spot zones". A UE 1 is able to communicate both with Macro BS 11 and Pico BS 21 (but not necessarily simultaneously) as indicated by the arrows in the Figure. When a UE starts to use a given cell for its communication, that cell is said to be "activated" for that UE, whether or not the cell is already in use by any other UEs. Incidentally, although the Macro and Small cells are depicted here as being provided by different base stations, this is not essential and the same base station may be responsible for both a Macro cell and a Small cell. For example, a cell operating in a higher frequency band is likely to experience greater pathloss, and thus have shorter range, than one in a lower frequency band; thus the same base station may provide both a lower-frequency Macro cell and a higher-frequency Small cell.

Although only two types of cell are shown in Figure 2, various types of Small cell may be present in a SCN including (in decreasing order of size), cells similar to current Micro, Pico and Femto cells. Femto and Pico cells can be overlaid on either Macro or Micro cells. Thus, networks can be designed such that the Macro cells provide blanket coverage while the Micro, Pico and/or Femto cells (or Small Cells) provide additional capacity. The envisaged Small Cells may also correspond to a New Carrier Type (NCT) not yet defined in LTE specifications.

### Carrier Aggregation (CA)

SCNs will support and enhance various capacity-boosting schemes to be applied to UEs, including so-called Carrier Aggregation (CA) which has been introduced into 3GPP (in the homogeneous network context) since LTE Release 10. Details of CA as applied to LTE are given in the 3GPP standard TS36.300, hereby incorporated by reference.

In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities.

A UE using CA has a plurality of serving cells, one for each CC. Management of connections of UEs to the network, broadcast of system information and establishment of radio bearers is part of Radio Resource Control (RRC). The UE has only one RRC connection with the network and the CC on which a UE receives system information when this connection is established re-established or handed over is called the Primary Cell or Pcell. All other CCs are called Secondary Cells or Scells. The CCs may for example correspond to Macro and Small cells in a SCN. Thus, for example, the same UE may use the Macro cell as its "primary" cell (Pcell) and a Small cell as a "secondary" cell (Scell). As well as possibly having different carrier frequencies, the Macro and Small cells may have different bandwidths. Generally, each cell is provided by base station antennas at a single site, but this does not exclude the possibility of one cell being provided by antennas at different sites.

A potential issue with CA in SCNs is that at least some of the CCs are likely to be provided by small base stations such as Home eNodeBs and femtocells, which use broadband internet for their backhaul connectivity to the network, and are therefore liable to incur greater latency (including a greater time taken to exchange information with other base stations) compared with macro cell eNodeBs.

Where the CCs are provided by geographically-separated base stations, these base stations will also generally experience different signal propagation delays from the UE. In order to take advantage of CA in the SCN scenario, Release 11 of LTE provides for multiple uplink Timing Advances (TAs), by which a UE can ensure that its uplink transmissions arrive in synchronization at the base stations providing the cells. Since the same base station may provide more than one cell, the concept of a Timing Advance Group (TAG) is used to group together carriers with the same TA value. However, various aspects of how CA may be most advantageously applied to the SCN have yet to be determined, as explained later.

### Uplink Channels in LTE

Since the embodiments to be described concern scheduling requests (SRs) in SCNs, some further explanation will be given of the nature of, and need for, these SRs.

An LTE system is a scheduled system in which transmission is organized in "frames" each containing twenty slots, two consecutive slots being referred to as a "subframe". For each transmission time interval of one or more subframes, a new scheduling decision is taken regarding which UEs are assigned/allocated to which time/frequency/spatial/code resources during this transmission time interval.

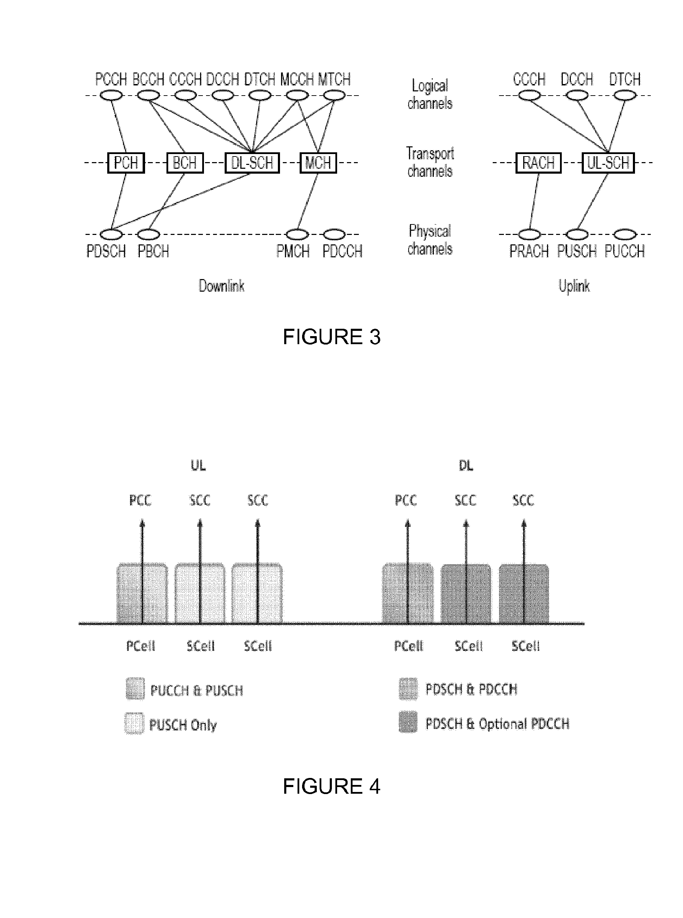

Several "channels" for data and signalling are defined at various levels of abstraction within the network. Figure 3 shows some of the channels defined in LTE-based systems at each of a logical level, transport layer level and physical layer level, and the mappings between them. For present purposes, the uplink channels are of particular interest.

In Figure 3, physical channels defined in the uplink are a Physical Random Access Channel (PRACH), a Physical Uplink Shared Channel (PUSCH), and a Physical Uplink Control Channel (PUCCH). An uplink physical channel corresponds to a set of resources carrying information originating from higher layers. In addition to the uplink channels, uplink signals such as reference signals, primary and secondary synchronization signals are typically defined.

The above mentioned 3GPP TS 36.300 provides an overall description of the radio interface protocol architecture used in LTE-based systems and in particular section 5.2 of 3GPP TS 36.300 relates to uplink transmission schemes. The physical channels in the uplink of LTE-based systems are described, for example, in 3GPP TS 36.211, section 5, which is hereby also incorporated by reference.

User data and optionally also higher-level control signalling is carried on the Physical Uplink Shared Channel PUSCH. The physical uplink control channel PUCCH carries uplink control information such as a scheduling request (SR), explained in more detail shortly, and a channel quality indicator (CQI) report. As illustrated in Figure 3, there is a downlink counterpart channel to the PUCCH, which is the Physical Downlink Control Channel (PDCCH) for carrying, in response to the scheduling request, an uplink scheduling grant. Incidentally, in LTE-A there is also an enhanced PDCCH called EPDCCH, which allows coordination among eNodeBs for reducing inter-cell interference.

The uplink scheduling grant also indicates the transmission rate (i.e. modulation and code rate). If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers. The PUCCH may support multiple formats as indicated in 3GPP TS 36.211, section 5.4.

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH.

The Physical Random Access Channel PRACH is used to carry the Random Access Channel (RACH) for accessing the network if the UE does not have any allocated uplink transmission resource. If a scheduling request (SR) is triggered at the UE, for example by arrival of data for transmission on PUSCH, when no PUSCH resources have been allocated to the UE, the SR is transmitted on a dedicated resource for this purpose. The transmission of SR is effectively a request for uplink radio resource on the PUSCH for data transmission. If no such resources have been allocated to the UE, the RACH procedure on PRACH is initiated. In this context, the PRACH signature can be considered as a request for grant of resources to send uplink data on PUSCH, producing a similar effect as transmission of SR, although conceptually SR and PRACH are quite different.

### Channels in CA

Having outlined some of the more important channels defined in LTE, their relationship to cells/CCs in the CA scenario can now be described using Figure 4.

As shown in Figure 4, under current LTE proposals, each Pcell can transmit PDCCH to a UE. An SCell may (or may not) provide PDCCH to a UE, depending on UE capabilities; however, uplink data on PUSCH, and BSR and some RACH can be transmitted by a UE with the required capabilities on both PCell and SCell. For LTE up to and including Release 11 the uplink control channel (PUCCH), which supports SR, is only transmitted on the PCell. Similarly, PRACH for scheduling requests is only transmitted on the PCell. However, these restrictions may not apply in future Releases.

If an Scell does not carry PDCCH, this implies that the scheduling information for that cell has to be carried in PDCCH of another cell (typically the Pcell) - so called cross-carrier scheduling. The PCell and SCells should have identical or very similar transmission timing which allows, for example, PDCCH on one cell to schedule resources on a different cell, and ACK/NACKs for PDSCH transmissions on SCells to be sent on the PCell. SCells may have different transmission timing at the UE in order to allow for the possibility that the cells are supported by antennas at different geographical sites. A PCell and/or SCells with the same timing would belong to the same TAG (Time Alignment Group). However, because of the tight timing synchronization requirements, PCells and SCells can be assumed to be controlled by the same eNodeB.

### Scheduling Request (SR) and Buffer Status Report (BSR)

To explain the above mentioned SR in more detail, in order to schedule uplink transmissions efficiently the network needs to be aware of the amount of data that the UE needs to transmit, the priority of such data (in the form of data streams of different types and priorities, reflecting different services being provided to the UE), and the uplink channel conditions. In LTE specifications this is provided for by the UE sending BSRs (buffer status reports) along with data transmissions via PUSCH, and by transmission of UL sounding reference signals (SRS). However, if the UE has no PUSCH resources available, there is no means to send a BSR. In such cases a scheduling request is triggered in the UE.

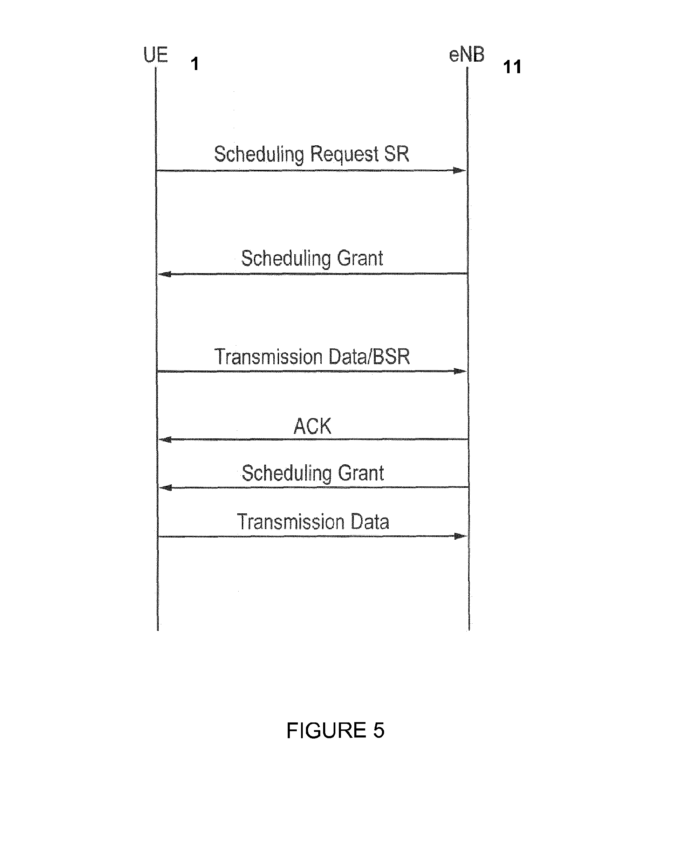

The process is shown in Figure 5. Assuming that the UE 1 already has some allocated uplink transmission resource for this purpose, it sends a Scheduling Request SR to the base station (eNodeB 11) as shown by the topmost arrow in the Figure, using pre-allocated resources on PUCCH. The SR indicates that the UE needs to be granted UL resources on PUSCH. In some cases the UE may not have an SR resource allocation on PUCCH, and then the RACH procedure would be initiated as already mentioned.

Following the identification by the UE of the need for PUSCH resources, and triggering SR transmission, on receiving the SR the network will typically send a PDCCH message with a small resource allocation on PUSCH. This is indicated by the second arrow, labelled "Scheduling Grant" in Figure 5. A large allocation could be granted, but at this point the network does not have an accurate view of the UE buffer state or the UL channel conditions, so a large resource grant could well be wasted. The same PDCCH grant message may be used to trigger an aperiodic SRS in order to obtain the uplink channel state.

Receipt of the Scheduling Grant enables the UE to send the transmission marked "Transmission Data/BSR" in Fig. 5. As indicated, this PUSCH transmission will typically include a buffer status report BSR, and after successful reception, the network will have knowledge of both UE buffer status and UL channel state. This allows efficient scheduling of PUSCH resources to match the UE traffic requirements. Conventionally, only one SR may be pending at a given time. A BSR supersedes the SR in the sense that when a SR is triggered, it is considered as pending until it is cancelled by transmission of a BSR which contains buffer status up to (and including) the last event that triggered a BSR, or when the UL grant(s) can accommodate all pending data available for transmission.

The BSR indicates the amounts of data buffered at the UE (i.e., ready for transmission on the uplink) with respect to each of up to four Logical Channel Groups, each LCG in turn comprising one or more Logical Channels, where each Logical Channel may be regarded as representing a specific service or application on the UE. The assignment of data to a LCG may be done on the basis of required quality of service (e.g. priority, delay requirements). In LTE the LCGs are processed with different priorities. Thus, the concept of LCGs allows the BSR to provide information on data amounts categorised by priority. The amount of information to be signalled using LCGs is less than would be required for indicating buffer status for all logical channels individually.

Thus, the eNodeB responds to the UE by sending, in addition to an ACK as indicated in the Figure, a Scheduling Grant suitable for the UE's traffic requirements. Finally, as shown by the arrow labelled "Transmission Data", the UE sends the data contained in its buffer.

The SR and BSR protocols are further described in 3GPP TS 36.321, sections 5.4.4, 5.4.5, and 6.1.3, and the SR procedure for a terminal procedure for determining physical uplink control channel assignment is described in 3GPP TS 36.213, section 10, which is also hereby incorporated by reference.

To summarise the foregoing, currently in LTE buffer status reports are used to indicate to the network information about the data ready to be transmitted from the terminal in the uplink. Data streams corresponding to logical channels are associated with logical channel groups, and depending on the arrival and priority of new data, a buffer status report (BSR) may be triggered. If no (PUSCH) resources are available to carry a BSR, a scheduling request (SR) may be transmitted. If no resources for SR are allocated, then a random access (RACH) transmission may take place.

The "Small Cell" concept which is currently being studied in 3GPP provides for the possibility of a terminal being supported by both a macro cell and one or more small cells, operating at the same or different carrier frequencies. This has some similarities with CA, but the timing relation between the cells may be less strictly controlled for small cells, and the cells may be controlled by different eNodeBs. Cells at significantly different frequencies (as envisaged for one of the small cell scenarios) are likely to have different channel conditions and traffic capacities. The small cell carrier may have higher data rate capacity, but less consistent geographical coverage In addition the backhaul capacity and latency may be different for macro cells and small cells. Therefore, under the Small Cell concept it would be advantageous for the network to be able to control both which data traffic from a given UE is routed via each carrier, and the arrangements for reporting uplink buffer status and scheduling requests, depending on channel conditions, which are likely to vary with time and location.

### Summary of the Invention

According to a first aspect of the present invention, there is provided a wireless communication method in which a terminal communicates with a network via at least two cells, wherein the terminal indicates to the network at least one preferred cell for its uplink data transmission by selecting at least one cell for transmission of a uplink data transmission request from among a plurality of said cells including said at least two cells. Thus, by its choice of cell for the uplink data transmission request, the terminal indicates which cell (or cells) it prefers to use for the subsequent uplink data transmission.

In this method, preferably, the terminal selects the at least one cell by taking into account characteristics of an uplink channel in at least one of the plurality of cells. More preferably, the terminal selects the at least one cell by taking into account characteristics of an uplink channel in each of the plurality of cells.

Here, the "characteristics" of the uplink channel may include an estimate of an available data rate on the channel, in which case the terminal may estimate the available data rate based on at least one of:
the uplink channel quality;
the available bandwidth; and
the fraction of available channel capacity available depending on loading of the cell.

One way for the terminal to estimate the uplink channel quality is by assuming reciprocity between uplink and downlink, that is based on one or more estimates of the quality of a downlink channel of the cell.

One possibility is for the terminal to select the cell(s) having the highest estimated available data rate among said plurality of cells.

The terminal may select more than one cell among said plurality of cells for sending the uplink data transmission request, in other words it may transmit more than one such request.

The plurality of cells may be supported by at least two base stations.

The uplink data transmission request can take different forms. In one embodiment, the at least one uplink data transmission request is a scheduling request and the terminal selects the cell(s) by taking into account availability of a transmission opportunity for a scheduling request in at least one of the plurality of cells, and/or lack of response to a scheduling request on a said cell.

Alternatively the uplink data transmission request may be a PRACH signature. In this case the terminal may select the cell(s) by taking into account availability of a transmission opportunity for a PRACH signature in at least one of the plurality of cells, and/or lack of response to a PRACH signature on a said cell.

In any method as defined above, preferably, the plurality of said cells are cells which are activated or prepared for the terminal.

In a further embodiment, the terminal selects the cell(s) by taking into account an offset. This offset is either determined by the network and signalled to the terminal, or determined by the terminal based on loading information of said cells, as signalled to the terminal by the network.

According to a second aspect of the present invention, there is provided a wireless communication network (in other words a wireless communication system) comprising a terminal and a plurality of base stations, the terminal arranged to communicate with the network via at least two cells, wherein the terminal is arranged to indicate to the network at least one preferred cell for its uplink data transmission by selecting at least one cell for transmission of a uplink data transmission request from among a plurality of said cells including said at least two cells.

According to a third aspect of the present invention, there is provided a terminal for use in a wireless communication network comprising a plurality of base stations, the terminal arranged to communicate with the network via at least two cells, wherein the terminal is arranged to indicate to the network at least one preferred cell for its uplink data transmission by selecting at least one cell for transmission of a uplink data transmission request from among a plurality of said cells including said at least two cells.

According to a fourth aspect of the present invention, there is provided a base station for use in a wireless communication network in which a terminal is arranged to communicate with the network via at least two cells, the base station being arranged to receive from the terminal an uplink data transmission request on a cell controlled by the base station and to infer, from the cell or cells on which the uplink data transmission request is received, the terminal's preferred cell or cells for its uplink data transmission.

In a further aspect, the present invention provides software in the form of computer-readable instructions which, when executed by a processor of radio equipment, provides the base station or the terminal as defined above. Such software may be recorded on one or more non-transitory storage media.

The term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. Whilst the term "cell" normally implies the provision of both a downlink and an uplink, this is not essential and in the present invention, at least one cell may be an uplink-only cell. Moreover the term "cell" may be regarded as equivalent to "carrier" unless demanded otherwise by the context. The term "cell" is intended also to include sub-cells, which could be sub-divisions of a cell based on using particular antennas or corresponding to different geographical areas within a cell. References to performing certain actions "at a cell" generally implies performing those actions in a base station which provides that cell. The cells may be associated with different base stations or with the same base station. The term "base station" itself has a broad meaning and encompasses, for example, an access point or transmission point. The terms "network" and "system" are used interchangeably in this specification.

In general, and unless there is a clear intention to the contrary, features described with respect to one aspect of the invention may be applied equally and in any combination to any other aspect, even if such a combination is not explicitly mentioned or described herein.

As is evident from the foregoing, embodiments of the present invention involve signal transmissions between cells and terminals (UEs) in a wireless communication system. The cells are associated with one or more base stations. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNodeB) (which term also embraces Home eNodeB) as appropriate in different situations. However, subject to the functional requirements of the invention, some or all base stations may take any other form suitable for transmitting and receiving signals from terminals.

Similarly, in the present invention, each terminal may take any form suitable for transmitting and receiving signals from base stations. For example, the terminal may take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

Embodiments of the present invention provide for transmission of a scheduling request using a cell selected from a set of cells by the mobile terminal depending on the UL channel characteristics for the cells in the set (and/or other criteria).

In a "Small Cell" scenario for 3GPP LTE, a terminal may be simultaneously served by a macro cell and one or more small cells. These may operate at different frequencies, have different bandwidths, traffic loading and support different QoS (Quality of Service). The invention allows the terminal to indicate the best uplink cell (or cells) for transmission, by transmission of a scheduling request on that cell. This can improve the achievable data rate and system capacity.

### Brief Description of the Drawings

Reference is made, by way of example only, to the accompanying drawings in which:
Figure 1 shows a network topology in LTE;
Figure 2 illustrates the principle of a Small Cell Network (SCN);
Figure 3 illustrates channels at each of a plurality of protocol layers in LTE;
Figure 4 shows how LTE channels are allocated to a Pcell and Scell in a SCN;
Figure 5 illustrates an example of a conventional radio resource allocation signalling procedure of an LTE-based system;
Figure 6 is a simplified flowchart of a procedure employed in embodiments of the present invention;
Figure 7 is a schematic block diagram of a terminal for use in the present invention; and

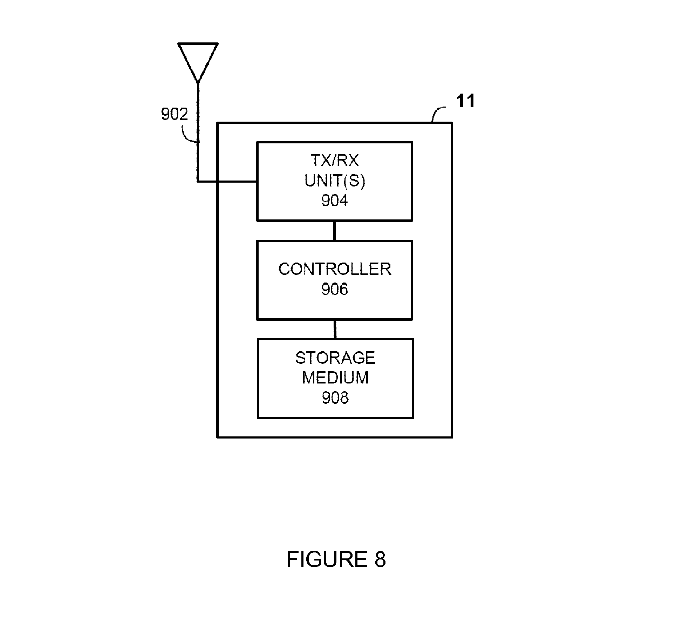

Figure 8 is a schematic block diagram of a base station for use in the present invention.

### Detailed Description

The current mechanisms in LTE for reporting uplink buffer status were designed under the assumption of a single uplink carrier for control signalling, and single set of (semi-statically configured) logical channels for uplink data transmission. For the Small Cell case, this does not allow data to be preferentially routed via the uplink carrier which would be most appropriate for transmission, and does not allow the carrier used for scheduling requests to take into account the characteristics of the channel which might dynamically depend on radio channel conditions, available capacity, which may depend on loading from other traffic, and the channel bandwidth (frequency range used by the cell, typically 1 to 10 MHz). Thus, it is not possible under current LTE specifications for the UE to select the CC/cell to be used for uplink data, or in other words to route data via one cell in preference to another.

For example, in a typical case a macro cell and a small cell would be controlled by different eNodeBs, which may schedule uplink transmissions independently. However, assuming that the macro cell would be more heavily loaded and/or have a smaller bandwidth, unless the macro cell has much better channel conditions, it would be desirable for the uplink data (or at least part thereof) to be routed via the small cell.

Therefore, a principle of embodiments of the invention is to enable at least one cell to be used for sending a scheduling request by a UE to be selected by the UE in dependence on the UL channel characteristics, the UE thereby indicating its preference for the at least one cell on which to transmit its uplink data (or at least part thereof).

One of the most relevant channel characteristics would be the achievable data rate which could depend on factors such as:
- The radio channel quality (SIR or SINR)
- Radio channel bandwidth
- Loading from other traffic

In LTE, the UL channel quality can be determined at the UE by measuring the DL channel and assuming reciprocity (in other words, that similar conditions exist on the UL channel). A suitable method is to estimate a metric such as the achievable data rate, for each cell and select the cell with the highest value of the metric for the transmission of scheduling request (SR or PRACH). This could take into account traffic loading. Here, "data rate" may generally be linked to "available capacity" referred to earlier, or alternatively the two terms may be distinguished by using "data rate" to refer to a particular transmission and "capacity" to refer to an upper limit on data rate, or average data rate. The radio channel bandwidth will normally refer to the frequency width of the CC/cell; alternatively it would be possible to restrict a CC/cell to only a portion of the available bandwidth. Either way this factor would typically change only infrequently if at all, the UE being notified of the bandwidth as part of system information acquired on joining the network. If within this scheme the network prefers to generally set a preference to support traffic with one of the cells (e.g. a small cell rather than a macro cell), then an offset could be applied to the metric to bias the cell selection.

Having outlined a principle of the invention, embodiments will now be described in more detail. In general, unless otherwise indicated, the embodiments described below are based on LTE, where the network (wireless communication system) comprises multiple eNodeBs, each controlling one or more downlink cells, and at least some of the downlink cells having a corresponding uplink cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH or EPDCCH) to the UEs. A PDCCH/EPDCCH message typically indicates whether the data transmission will be in the uplink (using PUSCH) or downlink (using PDSCH). The resource assignments granted by the eNodeB in the DL are determined using channel state information. This is provided by feedback from the UE based on channel measurements made using reference signals which may be transmitted by the eNodeB for each cell that it supports. This feedback typically consists of one or more instances of a data rate in the form of a channel quality indicator (CQI), a precoding matrix indicator (PMI) and rank indicator (RI).

We assume by way of example that a UE is configured to be served by two cells: a macro cell and a small cell on which all physical channels may be used. The use of at least one of the cells in UL and/or DL may be activated or deactivated by signalling.

As mentioned in the introduction, if a UE has data to transmit in the UL, but no suitable PUSCH resources are available, the UE may send a scheduling request on PUCCH using SR resources. If there is no suitable SR resource available, the UE may send PRACH to request PUSCH resources. Typically, the SR would apply to one subframe (not necessarily the current subframe, as there will be a delay before uplink transmission of data takes place). The details may depend on configuration.

### First Embodiment

In a first embodiment, any UL data may be transmitted via PUSCH on either cell, and a scheduling request may also be transmitted via SR on PUCCH on either cell. The UE selects the cell for transmission of the SR which has the highest value of a selection metric.

In one form of this embodiment, the metric is available data rate. As a concrete example, the UE may select a cell on the basis of highest achievable data rate, defined as:-
(system bandwidth in Hz) x (channel quality in bits per second) x (fraction of the time/frequency domain resources of that cell available to that UE).

In different variations of the embodiment the selection metric for a cell is determined from one or more of:
- The bandwidth (which may be indicated to the UE by signalling)
- The channel quality (which may be estimated from the DL channel quality or signalled from the base station)
- The channel capacity (which may depend on the traffic loading, which could be estimated by the UE or signalled by the base station. The traffic loading information may be exchanged between base stations before signalling to the UE).

It will be noted that there is some overlap among these factors; for example channel capacity will depend on the bandwidth and channel quality. However, it is not necessary for the UE to consider all of the above factors, and depending on UE capabilities, the UE may focus on one or other of the factors. It may simplify the processing required to consider only the bandwidth for example. Another issue is the information available to the UE: the UE may not know the channel quality or the traffic loading. In such cases the bandwidth will give at least an approximate selection metric.

In further variations, the selection may be based on a rule which considers more than one metric. Here, possible additional factors to take into account include any one or more of:
- backhaul latency for the cell (which may be signalled to the UE)
- reliability of the radio link (e.g. whether the currently-observed channel quality is likely to be available in future as judged based for example on historical information stored in the UE
- cost (in terms of financial billing to the user: a macro eNodeB may charge more to carry data than a small cell of a Home eNodeB for example)
- power consumption (which may vary for the UE depending on the carrier frequency)
- weighting factor (preference) per cell (e.g. indicated by the network)
- preference of the UE; for example a certain carrier frequency may be more or less compatible with other functionality of the UE, such as Wi-Fi
- whether the cell is indicated to the UE as an activated cell
- whether a signal from the cell is detected by the UE (or received with a power above a certain threshold)
- whether the cell supports a specific service preferred by the UE, such as multicast or broadcast (information on which might be broadcast in a cell) cell condition (e.g., congested or not; again this information may be broadcast by the cell)

Unlike the conventional SR procedure, it is no longer a requirement that no other SR be triggered while one SR is pending. Although this procedure could still be followed if desired, it would equally be possible to allow the UE to transmit a second SR for another cell, whilst a first SR was still pending.

### Second Embodiment

Configuration of SR resources may be different for each cell (for example the time interval between SR transmission opportunities may vary). In a second embodiment, the UE takes into account the timing of availability of SR resources on each cell. For example, the UE selects the cell with the next occurrence of SR resources for transmission of SR, but if both cells have SR resources the selection is carried out according to the first embodiment.

In a variation, the UE considers only cells having an SR opportunity within a predefined time window (such as the current subframe) for selection on the basis of the channel characteristics in accordance with the first embodiment.

In another variation, the SR may be transmitted on both cells, for example if the difference in the selection metric between the two cells does not exceed a threshold. In current LTE specifications, the PUCCH resources for SR are configured semi-statically and assuming time synchronization between the cells, SRs on different cells in the subframe would be substantially simultaneous. However, this is not to rule out non-simultaneous transmission of SRs, if allowed in future LTE specifications or if SR is sent on one cell and PRACH on another (see the fourth embodiment below).

As a further variation, if the UE finds that the value of the selection metric exceeds a predetermined threshold for one or more cells, representing an "acceptable" level, it proceeds to select the cell on the basis of availability.

In this embodiment the selection is not necessarily that of the cell with the best value of the selection metric; indeed it may not be necessary to consider the selection metric of every cell.

### Third Embodiment

A third embodiment is like the first embodiment except that no SR resources are configured in either cell in a time period within which the UE would like to obtain a grant for uplink data transmission. The UE selects a cell for transmission of PRACH, but based on the same or similar criteria as in the first embodiment.

### Fourth Embodiment

A fourth embodiment is like the first embodiment except that SR resources are configured in only one cell. In order to select between transmission of SR in one cell or PRACH in the other, the selection rule includes the time interval before the next SR resource is available. For example, if this exceeds a threshold, PRACH (rather than SR) is transmitted.

This embodiment would be applicable for example where the interval between SR resources (SR transmission opportunities) is multiple subframes.

### Fifth Embodiment

Variations of the fifth embodiment are like the second and fourth embodiments except that different parts of the data to be sent in the UL, corresponding to different services/applications, may have different priorities, and this is taken into account in the cell selection. This correspondence can be reflected in the LCGs to which data are assigned.

For example, if any of the data to be sent has high priority, the SR is sent on the cell with the first occurrence of SR resource, otherwise a selection metric is considered. Alternatively, if one of the cells has no SR resource (but wins on the selection metric), and the data has high priority, PRACH is transmitted on that cell. The priority of data in LTE may be determined from the relevant logical channel and/or logical channel group.

In any of the preceding embodiments, if a response to SR/PRACH is not received on one cell, for example within a given number of attempts, the SR (or PRACH) is transmitted on the other cell.

In any of the preceding embodiments a metric may be computed for each of the two cells, and the cell with the highest value of the metric then selected. In a variation, an offset may be applied to the metric value for one cell. This offset may be determined by specification, determined according to a rule, or signalled from the base station.

The preceding embodiments may be adapted for the case of more than two cells, for example by computing a metric for each cell and selecting the cell with the highest value. One or more of the cells may be activated or deactivated, and not included in the selection process when deactivated. Here "deactivated" means either in the sense of not currently in use by that UE, or in the sense of being temporarily shut down, for example if the eNodeB is powered down.

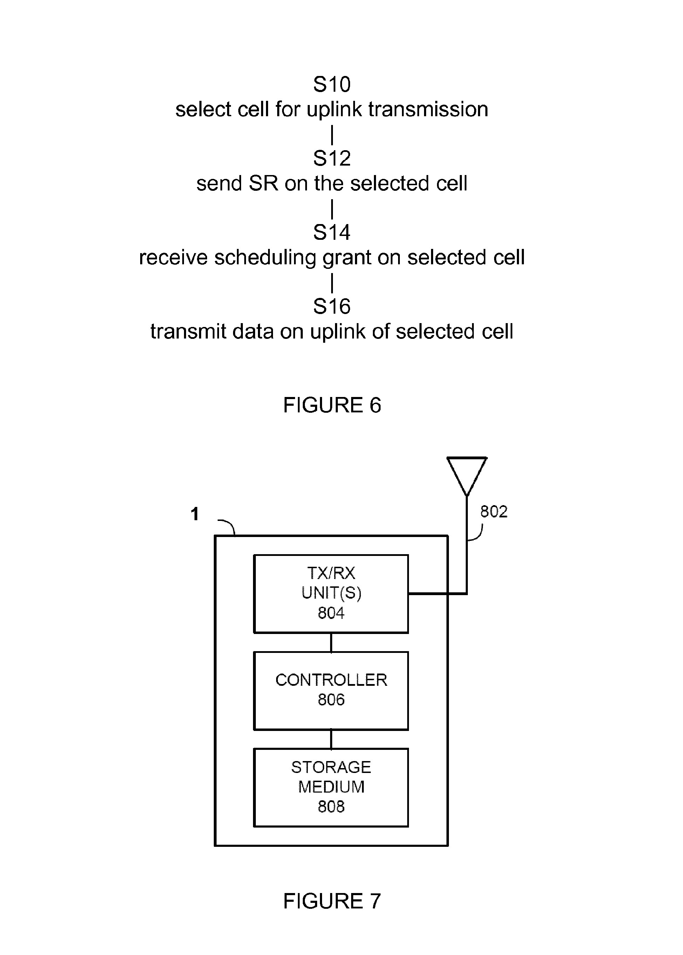

Figure 6 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, such as estimating the available data rate from each of the cellsin the manner outlined above. For example, the various functions described above may be embodied in the form of a computer program stored in the storage medium 808 and executed by the controller 806. The transmission/reception unit 804 is arranged, under control of the controller 806, to receive signals from the cells such as loading information of cells, a scheduling grantand so forth as discussed previously.

Figure 7 is a block diagram illustrating an example of an eNodeB 11 to which the present invention may be applied. The base station includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, such as scheduling including providing a scheduling grant for the UE in response to a scheduling request. For example, the various functions described above may be embodied in the form of a computer program stored in the storage medium 908 and executed by the controller 906. The transmission/reception unit 904 is responsible for transmission of reference signals, reception of signals from the UE 1 including scheduling requests and PRACH signatures, and so on under control of the controller 906.

To summarise, embodiments of the present invention may provide a wireless communication method for transmission of a uplink data transmission request (scheduling request) using a cell selected from a set of cells by the mobile terminal depending on the UL channel characteristics for the cells in the set. In this way, the terminal indicates its preference of cell to carry the uplink data transmission.

Various modifications are possible within the scope of the present invention.

As already mentioned, the term "cells" in the above description is to be interpreted broadly. Cells need not each have a different geographical area, or a different base station. In general, cells can be defined on a downlink, uplink, or on both.

Although reference has been made above to the terminal selecting a cell (singular) on which to transmit its scheduling request, more generally the terminal can select one or more preferred cells as desired.

The invention is equally applicable to LTE FDD and TDD, and the principle applied to other communications systems such as UMTS. If the invention were to be included in 3GPP specifications for LTE it would probably be in the following form:-
- in 3GPP TS 36.331, new RRC signalling to configure a set of cells on which the UE may transmit data, and resources for scheduling requests; and
- in 3GPP TS 36.321, new UE behaviour in relation to transmission of SR/PRACH.

### Industrial Applicability

In a "Small Cell" scenario for 3GPP LTE, a terminal may be simultaneously served by a macro cell and one or more small cells. These may operate at different frequencies, have different bandwidths, traffic loading and support different QoS (Quality of Service). Embodiments of the present invention allow the terminal to indicate the best uplink cell for transmission by transmission of a scheduling request on that cell. This will improve the achievable data rate and system capacity.

## Claims

1. A wireless communication method in which a terminal communicates with a network via at least two cells, wherein the terminal indicates to the network at least one preferred cell for its uplink data transmission by selecting at least one cell for transmission of an uplink data transmission request from among a plurality of said cells including said at least two cells.

2. The method according to claim 1 wherein the terminal selects the at least one cell by taking into account characteristics of an uplink channel in at least one of the plurality of cells.

3. The method according to claim 1 wherein the terminal selects the at least one cell by taking into account characteristics of an uplink channel in each of the plurality of cells.

4. The method according to claim 2 or 3 wherein the characteristics of the uplink channel include an estimate of an available data rate on the channel, the terminal estimating the available data rate based on at least one of:
the uplink channel quality;
the available bandwidth; and
the fraction of available channel capacity available depending on loading of the cell.

5. The method according to claim 4 wherein the terminal estimates the uplink channel quality based on one or more estimates of the quality of a downlink channel of the cell.

6. The method according to claim 4 or 5 wherein a cell selected by the terminal is the cell having the highest estimated available data rate among said plurality of cells.

7. The method according to any preceding claim wherein the terminal selects more than one cell among said plurality of cells for sending the uplink data transmission request.

8. The method according to any preceding claim wherein at least one uplink data transmission request is a scheduling request.

9. The method according to claim 8 wherein the terminal selects the at least one cell by taking into account availability of a transmission opportunity for a scheduling request in at least one of the plurality of cells, and/or lack of response to a scheduling request on a said cell.

10. The method according to any of claims 1 to 7 wherein at least one uplink data transmission request is a PRACH signature.

11. The method according to claim 10 wherein the terminal selects the at least one cell by taking into account availability of a transmission opportunity for a PRACH signature in at least one of the plurality of cells, and/or lack of response to a PRACH signature on a said cell.

12. The method according to any preceding claim wherein the plurality of said cells are cells which are activated or prepared for the terminal.

13. The method according to any preceding claim wherein the terminal selects the at least one cell taking into account an offset,
wherein the offset is determined by the network and signalled to the terminal, or the offset is determined by the terminal based on loading information of said cells signalled to the terminal by the network.

14. A wireless communication network comprising a terminal and a plurality of base stations, the terminal arranged to communicate with the network via at least two cells, wherein the terminal is arranged to indicate to the network at least one preferred cell for its uplink data transmission by selecting at least one cell for transmission of a uplink data transmission request from among a plurality of said cells including said at least two cells.

15. A terminal for use in a wireless communication network comprising a plurality of base stations, the terminal arranged to communicate with the network via at least two cells, wherein the terminal is arranged to indicate to the network at least one preferred cell for its uplink data transmission by selecting at least one cell for transmission of a uplink data transmission request from among a plurality of said cells including said at least two cells.

## Amended claims

### Amended claims in accordance with Rule 137(2) EPC.

1. A wireless communication method in which a terminal (1) communicates with a network via a plurality of cells (10, 20) which simultaneously serve the terminal, **characterised in that** the terminal (1) indicates to the network at least one preferred cell for its uplink data transmission by selecting at least one cell for transmission of an uplink data transmission request from among the plurality of said cells (10, 20).

2. The method according to claim 1 wherein the terminal (1) selects the at least one cell by taking into account characteristics of an uplink channel in at least one of the plurality of cells (10, 20).

3. The method according to claim 1 wherein the terminal (1) selects the at least one cell by taking into account characteristics of an uplink channel in each of the plurality of cells (10, 20).

4. The method according to claim 2 or 3 wherein the characteristics of the uplink channel include an estimate of an available data rate on the channel, the terminal (1) estimating the available data rate based on at least one of:
the uplink channel quality;
the available bandwidth; and
the fraction of available channel capacity available depending on loading of the cell.

5. The method according to claim 4 wherein the terminal (1) estimates the uplink channel quality based on one or more estimates of the quality of a downlink channel of the cell.

6. The method according to claim 4 or 5 wherein a cell selected by the terminal (1) is the cell having the highest estimated available data rate among said plurality of cells (10, 20).

7. The method according to any preceding claim wherein the terminal (1) selects more than one cell among said plurality of cells (10, 20) for sending the uplink data transmission request.

8. The method according to any preceding claim wherein at least one uplink data transmission request is a scheduling request.

9. The method according to claim 8 wherein the terminal (1) selects the at least one cell by taking into account at least one of:
(i) availability of a transmission opportunity for a scheduling request in at least one of the plurality of cells (10, 20), and
(ii) lack of response to a scheduling request on a said cell.

10. The method according to any of claims 1 to 7 wherein at least one uplink data transmission request is a PRACH signature.

11. The method according to claim 10 wherein the terminal (1) selects the at least one cell by taking into account at least one of:
(i) availability of a transmission opportunity for a PRACH signature in at least one of the plurality of cells (10, 20), and
(ii) lack of response to a PRACH signature on a said cell.

12. The method according to any preceding claim wherein the terminal (1) selects the at least one cell taking into account an offset,
wherein the offset is determined by the network and signalled to the terminal, or the offset is determined by the terminal based on loading information of said cells (10, 20) signalled to the terminal by the network.

13. A wireless communication network comprising a terminal (1) and a plurality of base stations (11, 21), the terminal (1) arranged to communicate with the network via a plurality of cells (10, 20) which simultaneously serve the terminal, **characterised in that** the terminal is arranged to indicate to the network at least one preferred cell for its uplink data transmission by selecting at least one cell for transmission of a uplink data transmission request from among the plurality of said cells (10, 20).

14. A terminal (1) for use in a wireless communication network comprising a plurality of base stations (11, 21), the terminal (1) arranged to communicate with the network via a plurality of cells (10, 20) which simultaneously serve the terminal, **characterised in that** the terminal (1) is arranged to indicate to the network at least one preferred cell for its uplink data transmission by selecting at least one cell for transmission of a uplink data transmission request from among the plurality of said cells (10, 20).
